Europäisches Patentamt

European Patent Office

Office européen des brevets

(11) Veröffentlichungsnummer: **0 300 267**
**A2**

(12) **EUROPÄISCHE PATENTANMELDUNG**

(21) Anmeldenummer: 88110714.8

(22) Anmeldetag: 05.07.88

(51) Int. Cl.⁴: **G01N 27/84 , G01N 27/85**

(30) Priorität: 08.07.87 DE 3722569

(43) Veröffentlichungstag der Anmeldung:
25.01.89 Patentblatt 89/04

(84) Benannte Vertragsstaaten:
AT BE CH DE ES FR GB GR IT LI LU NL SE

(71) Anmelder: MAGFOIL AG
Bundesplatz 3
CH-6300 Zug(CH)

(72) Erfinder: Walther, Karl G.
Theodor-Heuss-Strasse 35
D-5840 Schwerte(DE)
Erfinder: Walther, Ronald G.
Rütscherstrasse 175
D-5100 Aachen(DE)

(74) Vertreter: von Hellfeld, Axel, Dipl.-Phys. Dr. et al
Patentanwälte Wuesthoff- v.
Pechmann-Behrens-Goetz Schweigerstrasse
2
D-8000 München 90(DE)

(54) Verfahren zum Prüfen von metallischen Werkstücken und Behälter zur Verwendung in einem solchen Verfahren.

(57) Zum Prüfen von z. B. Schweißnähten unter Wasser mittels Teilchen aus magnetisierbarem Material, die sich in einem Magnetfeld in für Fehlstellen charakteristischer Weise anordnen, werden die Teilchen bei Beginn einer Prüfung in einer ersten Flüssigkeit $Fl_1$ suspendiert, wobei die Teilchen in der Suspension frei beweglich sind und keine Viskositätsänderung der Suspension erfolgt. Anschließend wird der Suspension eine Substanz zugefügt, die eine Zustandsänderung bewirkt, wodurch die im Magnetfeld ausgerichteten Teilchen in ihrer Lage fixiert werden.

FIG.1

## Verfahren zum Prüfen von metallischen Werkstücken und Behälter zur Verwendung in einem solchen Verfahren

Die Erfindung betrifft ein Verfahren zum Prüfen von metallischen Werkstücken, insbesondere Schweißnähten, bei dem
- Teilchen aus magnetisierbarem Material in einem zumindest teilweise durchsichtigen Behälter mit einer Flüssigkeit vermischt und nahe der zu prüfenden Stelle des Werkstückes angeordnet werden,
- ein Magnetfeld an der zu prüfenden Stelle und im Teilchen/Flüssigkeits-Gemisch erzeugt wird, dessen Verlauf von Fehlstellen im Werkstück beeinflußt wird und in dem sich die Teilchen bei Fehlstellen in charakteristischer Weise anordnen, und
- das Teilchen/Flüssigkeits-Gemisch nach einer Zeitspanne seinen Zustand derart ändert, daß die durch das Magnetfeld geordneten Teilchen in ihrer Lage im Behälter festgelegt werden.

Darüberhinaus betrifft die Erfindung auch einen Behälter, der in einem solchen Verfahren Verwendung findet.

Ein solches Verfahren und ein entsprechender Behälter sind aus der DE-PS 31 45 090 bekannt und dienen insbesondere dem Auffinden von Fehlern in Schweißnähten unter Wasser.

Bei dem bekannten Verfahren bzw. der bekannten Vorrichtung ist auf einer Trägerfolie eine Hauptkammer ausgebildet, in der zwei Unterkammern angeordnet sind. In der einen Unterkammer ist ein Gemisch aus verschiedenen pulverförmigen Substanzen einschließlich magnetisierbarer Teilchen (z. B. Eisenpulver) untergebracht, während in der anderen Unterkammer eine Flüssigkeit enthalten ist. Die Hauptkammer wird im wesentlichen durch eine durchsichtige Folie (Sichtfolie) gebildet und unter Wasser auf das zu prüfende Werkstück aufgelegt, wobei die Sichtfolie in Richtung auf das Werkstück weist, während die Trägerfolie vom Werkstück abgewandt ist. Nachdem die Hauptkammer derart auf das zu prüfende Werkstück (also z. B. die Schweißnaht) aufgelegt worden ist, werden die beiden Unterkammern mechanisch durch Druck aufgebrochen, so daß sich ihr Inhalt in der Hauptkammer vermischt. Die magnetisierbaren Teilchen werden dabei zusammen mit den anderen pulverförmigen Bestandteilen in die Flüssigkeit gemischt und es wird ein Magnetfeld angelegt, welches die zu untersuchende Stelle des Werkstückes und das Gemisch aus Teilchen und Flüssigkeit durchsetzt. Der Verlauf des Magnetfeldes wird durch eventuell vorhandene Fehlstellen im Werkstück (z. B. Risse in der Schweißnaht) beeinflußt und die Teilchen aus magnetisierbarem Material ordnen sich im Magnetfeld in einer Weise an, die für die Fehlstelle charakteristisch ist.

Bei dem aus der DE-PS 31 45 090 bekannten Verfahren erfolgt im Teilchen/Flüssigkeit-Gemisch nach ca. einer Minute eine Zustandsänderung derart, daß die Teilchen aus magnetisierbarem Material in ihrer Lage fixiert werden, so daß die für eine Fehlstelle charakteristische Anordnung der Teilchen auch nach Ausschalten des Magnetfeldes und Entfernung des Behälters vom zu untersuchenden Werkstück erhalten bleibt. Der Behälter wird dann vom Taucher abgekommen und über Wasser transportiert, wo die fixierte Anordnung der Teilchen untersucht werden und Rückschlüsse auf die Fehlstellen im Werkstück gewonnen werden können.

Bei dem bekannten Verfahren erfolgt die Zustandsänderung im Teilchen/Flüssigkeit-Gemisch eine vorgegebene Zeitspanne nach dem Aufbrechen der beiden Unterkammern und der Suspendierung der pulverförmigen Bestandteile in der Flüssigkeit. In dieser Zeitspanne muß der Taucher eine Vielzahl von Arbeiten durchführen, insbesondere den Behälter an der zu untersuchenden Stelle des Werkstückes befestigen und das Magnetisierungsgerät positionieren. Gelingt es dem Taucher nicht, in der vorgegebenen Zeitspanne alle Arbeiten mit der erforderlichen Genauigkeit auszuführen, so erfolgt die Zustandsänderung im Teilchen/Flüssigkeit-Gemisch zu früh und das Meßergebnis ist unbrauchbar.

Die Zeitspanne aber, die ein Taucher braucht, um die genannten Arbeiten durchzuführen, hängt von den Bedingungen ab, also z. B. von der Sicht, den Strömungsverhältnissen unter Wasser, der Zugänglichkeit des Werkstückes etc.

Auch bei dem aus der DE-PS 31 45 090 bekannten Verfahren kann die Zeitspanne bis zum Einsetzen der Zustandsänderung im Teilchen/Flüssigkeit-Gemisch bei der Herstellung der Behälter wahlweise in einem engen Bereich eingestellt werden. Die Zeitverzögerung bis zum Beginn der Zustandsänderung (dort eine Verkieselung) wird durch die eingemischte Menge an Methylcellulose bestimmt. Soll die Zeitverzögerung länger sein, so muß die Menge an Methylcellulose erhöht werden. Hierdurch wird aber in nachteiliger Weise die Viskosität der Mischung beeinflußt: die Mischung wird zähflüssiger. Eine Vergrößerung der Zähflüssigkeit der Mischung hat aber nachteilig zur Folge, daß die Beweglichkeit der Teilchen aus magnetisierbarem Material verringert wird. Die Bewegung der Teilchen aufgrund des Mangetfeldes in der Mischung wird also behidnert, so daß auch die charakteristische Anordnung der Teilchen aufgrund der Fehlstellen beeinträchtigt werden kann. Es ist anzustreben, daß die Teilchen in der Phase, in der sie sich im Mangetfeld ausrichten und anordnen, eine möglichst hohe Beweglichkeit in der Flüssigkeit aufweisen.

Bei dem bekannten Verfahren hängt die Zeitspanne bis zur Verkieselung des Teilchen/Flüssigkeit-Gemisches von der Hygroskopie der Methylcellulose ab und läßt sich etwa auf 30 Sekunden bis 90 Sekungen einstellen. Die Erhöhung des Anteils an Methylcellulose hat zur Folge, daß auch der Verkieselungsprozeß relativ langsam erfolgt. Die Mischung wird so ausgelegt, daß ca. fünf Minuten nach dem Mischen der Stoffe aus den beiden Unterkammern eine Festigkeit erreicht ist, bei der die Behälter vom Werkstück entfernt und abtransportiert werden können. Die endgültige Festikeit der Mischung wird erst nach ca. drei Stunden erreicht. Eine Verkürzung dieser Zeitspanne ist wünschenswert.

Wie vorstehend erläutert, ist es für das hier in Rede stehende Prüfungsverfahren mittels magnetisierbarer Teilchen wünschenswert, in der eingetlichen Meßphase, in der sich die Teilchen im Mangetfeld in einer für die Fehlstellen charakteristischen Weise anordnen, eine möglichst hohe Beweglichkeit der Teilchen in der suspension zu haben. Dies ist insbesondere bei Arbeiten "über Kopf" bedeutsam, da hierbei die magnetischen Kräfte der Schwerkraft der Teilchen entgegenwirken müssen. Beim bekannten Verfahren wurde deshalb der Pulvermischung Bleioxid zugefügt, welches dem Carbonyleisen einen zusätzlichen Auftrieb gab. Allerdings wurde durch das Bleioxid der Kontrast im erzeugten Teilchen-Bild reduziert, so daß die Auswertung der Bilder erschwert war.

Der Erfindung liegt die Aufgabe zugrunde, das gattungsgemäße Verfahren zum Prüfen von metallischen Werkstücken derart weiterzubilden, daß seine Durchführung erleichtert ist. Insbesondere soll ein Taucher nicht an vorgegebene Zeitspannen für die Durchführung von Prüfarbeiten gebunden sein.

Erfindungsgemäß wird diese Aufgabe bei einem Verfahren der eingangs genannten Art dadurch geläst, daß
- bei Beginn einer Prüfung die Teilchen aus magnetisierbarem Material in einer ersten Flüssigkeit (Fl₁) suspendiert sind oder werden, wobei im Teilchen/Flüssigkeit-Gemisch noch keine die Lage der Teilchen bewirkende Zustandsänderung erfolgt und sich die Teilchen im Magnetfeld in der für Fehlstellen charakteristischen Weise anordnen, und
- daß anschließend in dem Behälter zu einem frei wählbaren Zeitpunkt dem Teilchen-Flüssigkeit-Gemisch eine Substanz (Fl₂) zugefügt wird, welche die Zustandsänderung im Gemisch und Festlegung der geordneten Teilchen bewirkt.

Gemäß der Erfindung kann ein Taucher bei einer Materialprüfung unter Wasser zunächst in dem Behälter die Teilchen aus magnetisierbarem Material in einer Flüssigkeit suspendieren, wobei er praktisch beliebig lange Zeit hat, den Behälter auf dem zu prüfenden Werkstück zu positionieren, das Magnetisierungsgerät anzubringen etc, da noch keine Zustandsänderung in der Suspension erfolgt. Erst wenn alle Arbeiten abgeschlossen sind, bricht der Taucher mechanisch in dem Behälter eine weitere Kammer, in der eine weitere Substanz, wie eine andere Flüssigkeit enthalten ist, welche sich mit der suspension mischt und darin eine Zustandsänderung bewirkt, aufgrund derer die Teilchen in ihrer durch das Magnetfeld erzeugten Lage fixiert werden. Der Taucher kann die Kammern 18, 18′ auch anders als durch mechanischen Druck öffnen, nämlich z.B. durch dünne, elektrisch heizbare Drähte, welche den Behälter so durchsetzen, daß die Wände der Kammern 18, 18′ bei Erhitzung des oder der Drähte schmelzen und dabei die Kammern öffnen.

Als Zustandsänderung der Mischung zum Fixieren der Teilchen ist bevorzugt einen Änderung der Viskosität der mischung vorgesehen oder eine Verkieselung.

Als Flüssigkeit, in der die Teilchen aus magnetisierbarem Material ohne wesentliche Zustandsänderung suspendierbar sind, wird vorzugsweise entionisiertes Wasser und als zugefügte Sub stanz zur Zustandsänderung eine zweite Flüssigkeit, wie eine alkalische Lösung aus Nesosilikaten verwendet.

Die Teilchen aus magnetisierbarem Material sind bevorzugt in einer Pulver-Mischung enthalten, die auch Zinkoxid und weißen Zement aufweist, jedoch keine Methylcellulose. Im entionisierten Wasser haben die Teilchen aus magnetisierbarem Material zunächst eine hohe Beweglichkeit, so daß sie sich im Magnetfeld schnell ausrichten. Es genügt in der Regel eine Magnetisierungszeit von 20 Sekunden. Wird dann die alkalische Lösung aus Nesosilikaten in die Suspension gemischt, beginnt zunächst relativ langsam eine Verkieselung an wenigen Kernen. Die Verkieselung wird dann rasch schneller, bis die Teilchen fixiert sind.

Die Erfindung stellt auch eine Vorrichtung zum Prüfen von metallischen Werkstücken mittels Teilchen aus magnetisierbarem Material, die in einem Magnetfeld ausgerichtet werden, bereit, wobei in einer ersten Kammer eine Flüssigkeit enthalten ist, die mit einem die Teilchen enthaltenden Pulver mischbar ist, ohne daß eine die Teilchen in ihrer Lage festhaltende Zustandsänderung erfolgt und wobei in einer zweiten Kammer eine weitere Substanz enthalten ist, die bei Hinzufügen zu der Mischung aus den Teilchen und der Flüssigkeit eine die Teilchen in ihrer Lage festhaltende Zustandsänderung in der Mischung bewirkt.

Eine derartige Vorrichtung läßt sich einfach und kostengünstig derart herstellen, daß die Kammern in Schläuchen ausgebildet sind.

Während beim Stand der Technik (DE-PS 31 45 090) die Wirksamkeit der alkalischen Lösung von Nesosilikaten in der Mischung mit nichtentionisiertem Wasser nach ca. 2 bis 3 Monaten Lagerzeit nachließ und die Aushärtezeiten dadurch verlängert wurden, werden bei einer erfindungsgemäßen Vorrichtung die Flüssigkeit, wie entionisiertes Wasser, und die eine Zustandsänderung bewirkende Substanz, wie eine alkalische Lösung aus Nesosilikaten, im Behälter getrennt aufbewahrt, so daß die Lagerzeit wesentlich verlängert ist.

Die bekannte Vorrichtung hatte weiterhin den Nachteil, daß insbesondere bei Arbeiten "über Kopf" Luftbestandteile aus der Pulvermischung aufgrund ihres Auftriebs sich an der Sichtfolie absetzen, wodurch das Analysieren der durch die fixierten Teilchen erzeugten Strukturen erschwert wurde.

Zur Vermeidung dieses Nachteils ist in einer bevorzugten Weiterbildung der Erfindung vorgesehen, daß eine Pulvermischung, die als wesentliche Bestandteile weißen Zement, Carbonyleisen und Zinkoxid enthält, nach dem Mischen in einer mechanischen Presse zu einer linsenförmigen Tablette verdichtet wird. Diese Tablette wird in eine in dem Behälter vorgesehene Pulverkammer gegeben und diese wird sodann in einer Vakuumkammer zum Entfernen der Gase evakuiert.

Nachfolgend wird ein Ausführungsbeispiel der Erfindung anhand der Zeichnung näher erläutert. Es zeigt:

Fig. 1 eine schematische Darstellung einer Vorrichtung zum Prüfen von metallischen Werkstücken,

Fig. 2 einen Schnitt entlang der linie I-II der Fig. 1, und

Fig. 3 einen Schnitt entlang der Linie III-IV der Fig. 1.

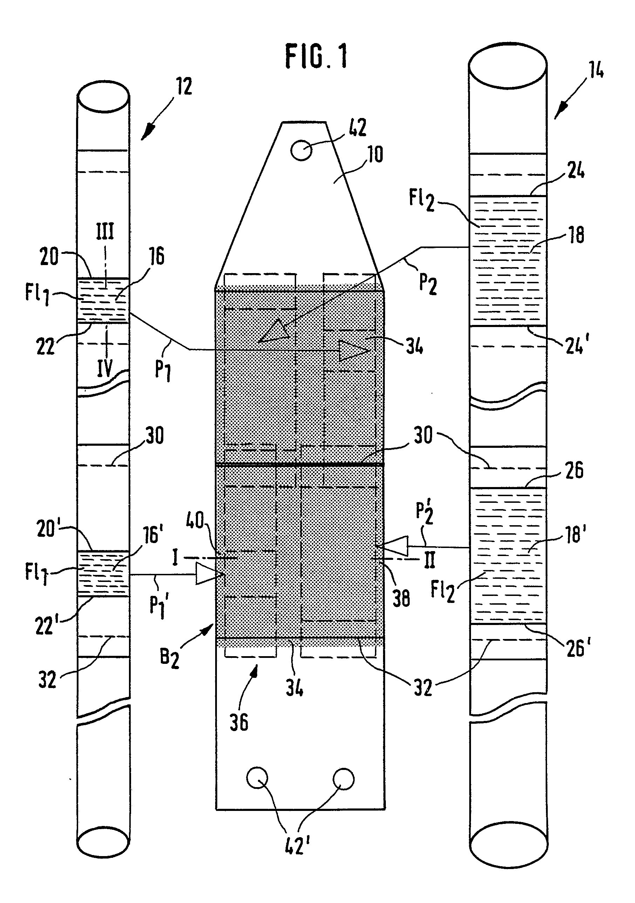

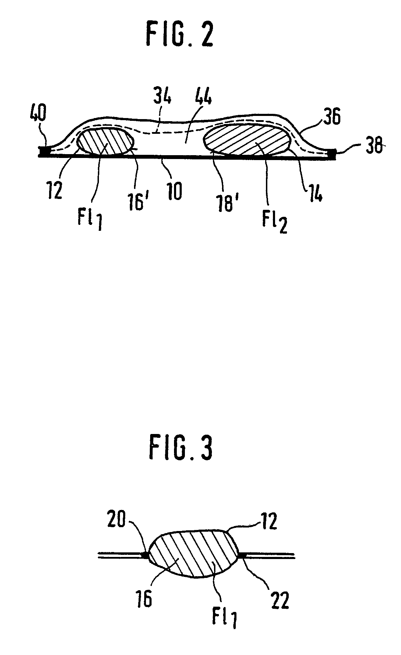

Fig. 1 zeigt eine Trägerfolie 10 aus Kunststoff sowie zwei Schläuche 12 und 14, ebenfalls aus Kunststoff. In den in Fig. 1 links bzw. rechts von der Trägerfolie 10 gezeichneten Schläuchen 12 bzw. 14 sind Flüssigkeitskammern 16, 16', 18, 18' ausgeformt (siehe auch Fig. 3). Durch geschweißte oder geklebte Nähte 20, 20', 22, 22', 24, 24', 26 und 26' sind in den beiden Schläuchen 12 bzw. 14 die einzelnen Kammern abgetrennt.

In der Kammern 16, 16' ist jeweils eine Flüssigkeit $Fl_1$ enthalten. Beim dargestellten Ausführungsbeispiel ist die Flüssigkeit $Fl_1$ entionisiertes Wasser. In den Kammern 18, 18' ist eine alkalische Lösung von Nesosilikaten enthalten.

Bei der Herstellung der gebrauchsfertigen Vorrichtung zum Prüfen von metallischen Werkstücken werden die in den Schläuchen 12 bzw. 14 ausgebildeten Kammern 16, 16', 18, 18' gemäß den Pfeilen $P_1$, $P_1'$, $P_2$ bzw. $P_2'$ auf der Trägerfolie 10 positioniert.

Gemäß den Fig. 1 und 2 wird über die auf der Trägerfolie 10 angeordneten Kammern 16, 16', 18, 18' ein durchgehendes Netz aus Kunststoff gelegt und über das Netz eine durchsichtige Sichtfolie 36, ebenfalls aus Kunststoff. Sodann werden gemäß den Fig. 1 und 2 die Trägerfolie 10, das Netz 34 und die Sichtfolie 36 entlang der Schweißnähte 38 und 40 miteinander verbunden. Die Kammern 16, 16', 18, 18' sind ebenfalls durch Schweißung oder Klebung an überstehenden Schlauchabschnitten mit der Trägerfolie 10 verbunden.

Weiterhin werden zwischen der Sichtfolie 36 und dem Netz 34 benachbart den das entionisierte Wasser enthaltenden Kammern 16, 16' jeweils gepreßte und evakuierte Tabletten aus einem Carbonyleisen, Zinkoxid und weißen Zement enthaltenden Pulver angeordnet (nicht gezeigt).

Gemäß Fig. 1 werden auf der Trägerfolie 10 durch die Schweißnaht 30 getrennt zwei Behälter gebildet, die jeweils eine Kammer mit der Flüssigkeit $Fl_1$, eine Kammer mit der Flüssigkeit $Fl_2$ und die Tablette enthalten.

Wie Fig. 1 zu entnehmen ist, sind in den beiden benachbarten und durch die Schweißnaht 30 getrennten Behältern die Kammern mit den unterschiedlichen Flüssigkeiten $Fl_1$ und $Fl_2$ "kreuzweise" angeordnet, d. h. in dem oberen Behälter ist die Kammer 18 gemäß dem Pfeil $P_2$ links und die Kammer 16 gemäß dem Pfeil $P_1$ rechts angeordnet, während in dem Behälter unterhalb der Schweißnaht 30 die Kammern 16' und 18' gemäß den Pfeilen $P_1'$ bzw. $P_2'$ links bzw. rechts angeordnet sind.

Zur Durchführung der Prüfung einer Schweißnaht auf Risse oder andere Fehlstellen wird die Trägerfolie vom Taucher unter Wasder derart auf die zu untersuchende Schweißnaht gelegt, daß die Sichtfolie 36 direkt an der Schweißnaht anliegt, also die Trägerfolie 10 von der Schweißnaht abgekehrt ist. Zuvor hat der Taucher die entionisiertes Wasser $Fl_1$ enthaltenden Kammern 16, 16' mechanisch durch Druck zum Platzen gebracht, so daß sich in der Hauptkammer 44 (Fig. 2), die zwischen der Trägerfolie 10 und der Sichtfolie 36 gebildet ist, die Pulver-Tablette im entionisierten Wasser auflöst.

Sodann legt der Taucher in an sich bekannter Weise eine Magnetisierungseinrichtung derart an das zu prüfende Werkstück an, daß ein Magnetfeld sowohl die zu untersuchende Schweißnaht als auch die Suspension der Teilchen aus mangetisierbarem Material (hier: Carbonyleisen) durchsetzt. Die Teilchen aus Carbonyleisen ordnen sich im Magnetfeld an und bilden bei Fehlstellen charakteristische Strukturen, wie Rillen, Häufungen etc., welche vom Fachmann später analysiert werden können.

Da in der Suspension aus entionisiertem Wasser und der Zinkoxid, weißen Zement und Carbonyleisen enthaltenden Pulvermischung noch keine Viskositätsänderung eintritt, sind die Pulverteilchen frei beweglich und können sich im Magnetfeld sehr schnell, z. B. innerhalb einer Sekunde, ausrichten. Der Taucher unterliegt beim Anbringen der Trägerfolie über der Schweißnaht und beim Positionieren des Magnetisierungsgerätes keinerlei zeitlichen Einschränkungen. Erst wenn diese Arbeiten abgeschlossen sind, öffnet der Taucher durch Druck die Kammern 18, 18', so daß die Flüssigkeit $Fl_1$, also die alkalische Lösung aus Nesosilikaten, in die Suspension eindringt und dort eine Zustandsänderung hervorruft, aufgrund derer die ausgerichteten Teilchen aus magnetisierbarem Material in ihrer für eveutell vorhandene Fehlstellen charakteristischen Lage fixiert werden.

Das Kunststoffnetz 34 fördert die Fixierung der Teilchen, so daß nach der Zustandsänderung in der Suspension (hier: eine Verkieselung) die Trägerfolie 10 von der untersuchten Schweißnaht abgenommen und an Deck gebracht werden kann, ohne daß die charakteristische Anordnung der Teilchen gestört wird.

## Ansprüche

1. Verfahren zum Prüfen von metallischen Werkstücken, insbesondere Schweißnähten, bei dem
- Teilchen aus magnetisierbarem Material in einem zumindest teilweise durchsichtigen Behälter mit einer Flüssigkeit vermischt und nahe der zu prüfenden Stelle des Wekstückes angeordnet werden,
- ein Magnetfeld an der zu prüfenden Stelle und im Teilchen/Flüssigkeit-Gemisch erzeugt wird, dessen Verlauf von Fehlstellen im Werkstück beeinflußt wird und in dem sich die Teilchen bei Fehlstellen in charakteristischer Weise anordnen, und
- das Teilchen/Flüssigkeit-Gemisch nach einer Zeitspanne seinen Zustand derart ändert, daß die durch das Magnetfeld geordneten Teilchen in ihrer Lage im Behälter festgelegt werden,
dadurch **gekennzeichnet,** daß
- bei Beginn einer Prüfung die Teilchen aus magnetisierbarem Material in einer ersten Flüssigkeit ($Fl_1$) suspendiert sind oder werden, wobei im Teilchen/Flüssigkeit-Gemisch noch keine die Lage der Teilchen festlegende Zustandsänderung erfolgt und
sich die Teilchen im Magnetfeld in der für Fehlstellen charakteristischen Weise anordnen,
- und daß anschließend in dem Behälter zu einem frei wählbaren Zeitpunkt dem Teilchen/Flüssigkeit-Gemisch eine Substanz ($Fl_2$) zugefügt wird, welche die Zustandsänderung im Gemisch und Festlegung der geordneten Teilchen bewirkt.

2. Verfahren nach Anspruch 1,
dadurch **gekennzeichnet,**
daß bei der Zustandsänderung eine Änderung der Viskosität des Teilchen/Flüssigkeit-Gemisches eintritt.

3. Verfahren nach einem der Ansprüche 1 oder 2,
dadurch **gekennzeichnet,**
daß als erste Flüssigkeit ($Fl_1$) ein Lösungsmittel, wie Wasser, und daß als zugefügte Substanz eine zweite Flüssigkeit ($Fl_2$) verwendet wird.

4. Verfahren nach einem der vorhergehenden Ansprüche,
dadurch **gekennzeichnet,**
daß die Teilchen aus magnetisierbarem Material vor Beginn einer Prüfung getrennt von der ersten Flüssigkeit ($Fl_1$) und der Substanz ($Fl_2$) im Behälter aufbewahrt werden, und daß zum Einleiten einer Prüfung die Teilchen in der ersten Flüssigkeit suspendiert werden.

5. Verfahren nach einem der vorhergehenden Ansprüche,
dadurch **gekennzeichnet,**
daß als erste Flüssigkeit ($Fl_1$) entionisiertes Wasser und als Substanz eine alkalische Lösung aus Nesosilikaten verwendet wird.

6. Verfahren nach einem der vorhergehenden Ansprüche,
dadurch **gekennzeichnet,**
daß die Teilchen aus mangetisierbarem Material in einer Pulvermischung enthalten sind, die auch Zinkoxid und weißen Zement aufweist.

7. Vorrichtung zum Durchführen eines Verfahrens gemäß einem der Ansprüche 1 bis 6, mit einer zumindest teilweise durchsichtigen Hülle und einer Trägerfolie, auf der Kammern zur Aufnahme von Teilchen aus mangetisierbarem Material sowie Flüssigkeit ausgebildet sind,
dadurch **gekennzeichnet,**
daß in einer ersten Kammer (16, 16') eine Flüssigkeit ($Fl_1$) enthalten ist, die mit einem die Teilchen aus magnetisierbarem Material enthaltenden Pulver mischbar ist, ohne daß eine die Teilchen in ihrer Lage festhaltende Zustandsänderung der Mischung erfolgt, und daß in einer zweiten Kammer (18, 18') eine Substanz ($Fl_2$) enthalten ist, die bei Hinzufügen zu der Mischung aus den Teilchen und der Flüssigkeit ($Fl_1$) eine die Teilchen in ihrer Lage festhaltende Zustandsänderung der Mischung bewirkt.

8. Vorrichtung nach Anspruch 7,
dadurch **gekennzeichnet,**
daß die Kammern (16, 16' bzw. 18, 18') für die Flüssigkeit ($Fl_1$) bzw. die Substanz ($Fl_2$) in Schläuchen (12, 14) ausgebildet sind.

9. Vorrichtung nach einem der Ansprüche 7 oder 8,

dadurch **gekennzeichnet,**

daß als Substanz (Fl$_2$) eine Flüssigkeit vorgesehen ist.

10. Vorrichtung nach einem der Ansprüche 7 bis 9,

dadurch **gekennzeichnet,**

daß zwei Schläuche (12, 14) vorgesehen sind, in denen mehrere Kammern (16, 16', 18, 18') in Schlauchabschnitten ausgebildet sind.

11. Vorrichtung nach einem der Ansprüche 7 bis 10,

dadurch **gekennzeichnet,**

daß die Teilchen aus mangetisierbarem Material Carbonyleisen enthalten und mit Zusatzstoffen, wie insbesondere weißem Zement und Zinkoxid, zu einer Tablette gepreßt sind.

12. Verfahren bzw. Vorrichtung nach einem der vorhergehenden Ansprüche,

dadurch **gekennzeichnet,**

daß die Prüfung des metallischen Werkstückes unter Wasser erfolgt.

MAGFOIL AG
EP-62 508

# FIG.1

# FIG. 2

# FIG. 3